# EUROPEAN PATENT APPLICATION

(11) **EP 0 907 113 A2**
(43) Date of publication of application: **07.04.1999**
(21) Application number: 98304029.6
(22) Date of filing: 21.05.1998
(51) Int. Cl.: G03G 15/01

(54) **Colour registration correction method of image formation device**

(30) Priority: 04.08.1997 KR 9737260
(71) Applicant: Samsung Electronics Co., Ltd., Suwon-city, Kyungki-do (KR)
(72) Inventor: Kim, Nam-ryoung, 104-1111, Hanyang Apt., Paldal-gu, Suwon-city, Kyungki-do (KR)
(74) Representative: Chugg, David John

(57) **Abstract**

A colour registration correcting method of an image formation device. The method includes the steps of arbitrarily selecting one of Y-, M-, C- and K-LSUs to independently drive the selected LSU; generating synchronization-window signals differing by the magnitude of mis-registration among the LSUs with respect to other LSUs except the selected LSU; and driving each driving motor such that the other LSUs meet with each of the sync hronization-window signals. An arbitrary reference LSU is independently driven, to detect the difference in distances between the reference LSU and the respective other LSUs. Also, synchronization-window signals are generated according to the differences and the other LSUs correspond to the synchronization window signals, to thereby easily correct LSU fixing errors of a asynchronization sub-scan direction. Accordingly, the colour registration of a sub-scanning direction may be precisely controlled.

## Description

The present invention relates to a colour registration correction method, and more particularly, to a colour registration correction method of an image formation device by which asynchronization between laser scanning units (LSUs) is performed by a circuit, to control colour registration of a sub-scanning direction (a traveling direction of a photoreceptor belt).

In general, an image formation device is for reproducing characters or images on a recording medium according to transmitted character or image data signals. The image formation device typically includes a photoreceptor member such as a photoreceptor drum or a photoreceptor belt for forming a latent electrostatic image, an electrifying device for electrifying the photoreceptor member, an exposing device for selectively removing charges by radiating light to the electrified photoreceptor member to pattern the latent electrostatic image, a developing device for coating a developing medium such as a toner or a developer on the exposed latent electrostatic image to develop the latent electrostatic image, and a transferring device for transferring the developed latent electrostatic image to the record medium by pressure and heat.

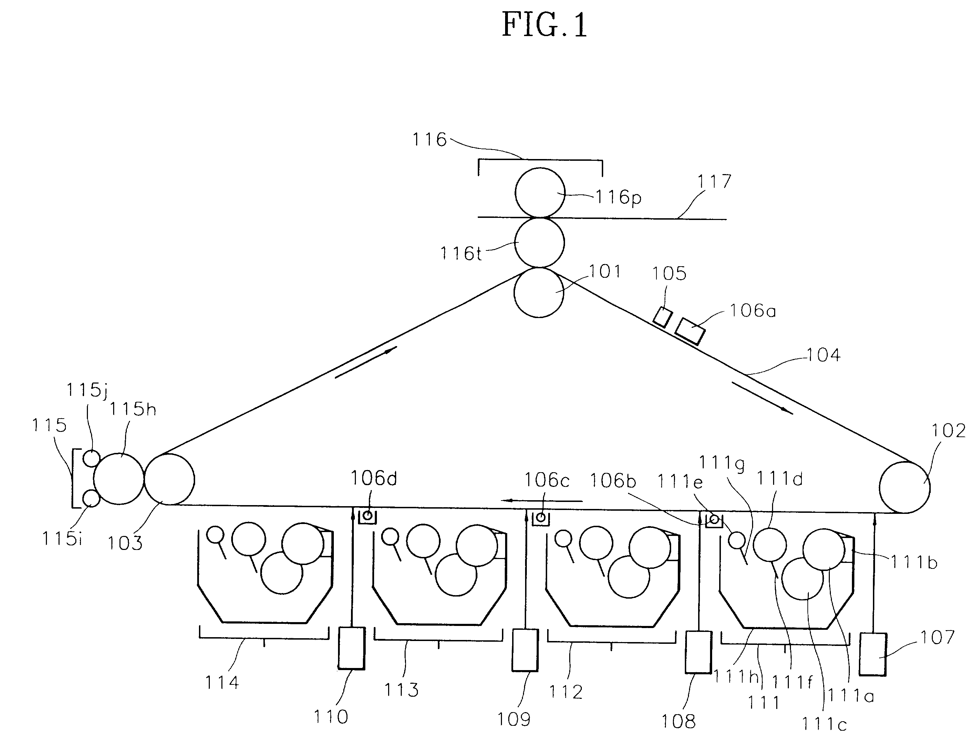

Figure 1 is a schematic view of a general image formation device.

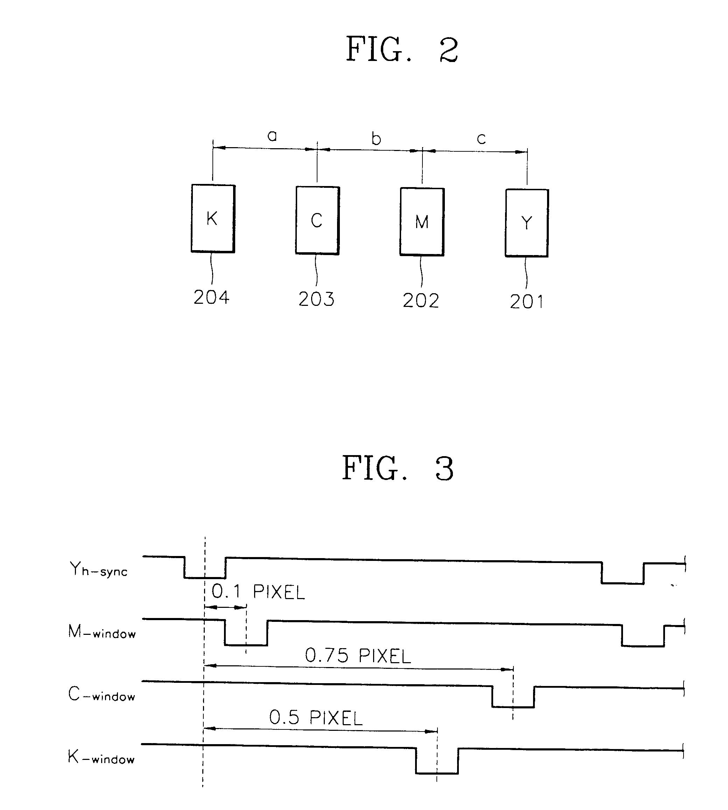

Referring to Figure 1, the image formation device includes a photoreceptor belt 104 circulated by first, second and third belt rollers 101, 102 and 103, a charge remover 105 for removing charges remaining in the photoreceptor belt 104, electrifying devices 106a through 106d for electrifying the photoreceptor belt 104, exposing devices 107, 108, 109 and 110 having LSUs 201 to 204 (see Figure 2) for irradiating laser beams such that an image formation region of the charged photoreceptor belt 104 is selectively discharged by an image formation pattern, developing devices 111, 112, 113 and 114 for developing a latent image formed on the photoreceptor belt 104 by the developer, a dryer 115 for drying the developer coated on the latent image, and a transferring device 116 for transferring an arbitrary image formed on the photoreceptor belt 104 to a recording medium 117 such as a recording paper or a film.

Here, the developing device 111 is composed of a developing roller 111a for coating the developer on the photoreceptor belt 104, a developer supplying device 111b for supplying the developer to the developing roller 111a, a cleaning roller 111c for removing the developer adhering to a rear portion of the developing roller 111a, first and second squeegee rollers 111d and 111e for removing the developer remaining on the photoreceptor belt 104, first and second blades 111f and 111g for removing the developer of the first and second squeegee rollers 111d and 111e, and a developer recovery container 111h for recovering the removed developer. Also, the dryer 115 includes a drying roller 115h and heating rollers 115i and 115j for drying the developer on the photoreceptor belt 104, and the transferring device 116 includes a transfer roller 116t rotating closely to the first belt roller 101, with the photoreceptor belt 104 interposed therebetween, and a fixing roller 116p for rotating closely to the transfer roller 116t to fix the image transferred to the transfer roller 116t on the recording medium 117.

In the above image formation device, as shown in Figure 2, it is difficult to exactly arrange yellow(Y-), magenta(M-), cyan(C-) and black(K-) LSUs 201, 202, 203 and 204 with distances **a**, **b** and **c** between the LSUs being equal and corresponding to a resolution distance. For example, assuming that the resolution is 600dpi, a resolution interval is 1/600 inch. Therefore, it is difficult to physically control intervals **a**, **b** and **c** between LSUs 201, 202, 203 and 204 to be equal, to thereby generate an incorrect colour registration by ±½ pixel. As a result, it is impossible to reproduce the image according to a predetermined design reference.

With a view to solve or reduce the above problems, it is an aim of preferred embodiments of the present invention to provide a colour registration correcting method of an image formation device by which asynchronization between laser scanning units (LSUs) is performed by a circuit, to control colour registration of a sub-scanning direction.

According to a first aspect of the invention, there is provided a colour registration correcting method of an image formation device comprising the steps of: arbitrarily selecting one of Y-, M-, C- and K-LSUs and independently driving the selected LSU; generating respective synchronization-window signals amongst the non-selected LSUs, which signals differ according to the magnitude of mis-registration between the selected LSU and the respective non-selected LSUs; and driving each driving motor such that each of the non-selected LSUs meet with each of the synchronization-window signals.

Any one of the Y-LSU, M-LSU, C-LSU or K-LSU may be the arbitrarily selected one.

Preferably, the non-selected LSUs are driven such that their respective synchronization-window signal meets with a horizontal-synchronization signal.

Preferably, a beam detection signal is used for the horizontal-synchronization signal.

A photoreceptor belt edge detection signal may be used for the horizontal-synchronization signal.

According to embodiments of the present invention, anarbitrary reference LSU independently drives, to detect differences between the reference LSU and the respective other LSUs. Also, synchronization window signals are generated according to the differences and the other LSUs correspond to the synchronization window signals, to thereby easily correct LSU fixing errors of a asynchronization sub-scan direction. As a result, the colour registration of a sub-scanning direction may be precisely controlled.

For a better understanding of the invention, and to show how embodiments of the same may be carried into effect, reference will now be made, by way of example, to the accompanying diagrammatic drawings, in which:
Figure 1 is a sectional view of a general image formation device;
Figure 2 is a schematic view of Y, M, C and K LSUs arranged in an exposing device of the image formation device of Figure 1; and
Figure 3 are waveform diagrams showing a horizontal-synchronization signal of a Y-LSU and respective synchronization-window signals of M, C and K LSUs corresponding to the horizontal- synchronization signal of the Y-LSU for illustrating a colour registration correcting method of an image formation device according to an embodiment of the present invention.

Referring to Figure 2, according to a colour registration correcting method of an image formation device of the present invention, an arbitrarily Y-, M-, C- or K-LSU among the LSUs 201, 202, 203 and 204 is selected to be independently driven. Here, the Y-LSU 201 is selected as a reference LSU. The other M-, C- and K-LSUs 202, 203 and 204 may, of course, alternatively be selected as the reference LSU.

When the selected LSU is driven independently, a mis-registration by a predetermined distance is generated among the LSUs 201, 202, 203 and 204 on the basis of the selected LSU, and synchronization-window signals differing by the distance of the mis-registration are generated by each of the LSUs except the selected LSU, respectively. Then, a driving motor is driven so that the synchronization-window signal meets with the LSUs.

For example, when the Y-LSU 201 is selected and independently driven so that the difference in distances between the Y-LSU 201 and the M-LSU 202 is 0.1 pixel, between the Y-LSU 201 and the C-LSU 203 is 0.75 pixel and between the Y-LSU 201 and the K-LSU 204 is 0.5 pixel, respectively, and a period of a line synchronization signal is 500 µs, as shown in Figure 3, synchronization-window signals, i.e., M-window, C-window and K-window, are generated by the M-, C- and K-LSUs 202, 203 and 204, spaced by the difference in distances between each LSU and the horizontal-synchronization signal (Yh-sync) or a line synchronization signal of the Y-LSU 201. Then, driver motors drive such that each of the M-, C- and K-LSUs 202, 203 and 204 meets with the synchronization-window signals, i.e., M-window, C-window and K-window, respectively. That is, the other LSUs 202, 203 and 204 are driven such that the horizontal-synchronization signal meet with the synchronization-window signal. At this time, a beam detection signal or a photoreceptor belt edge detection signal may be used for the horizontal-synchronization signal. Therefore, LSU fixing errors of an asynchronization sub-scanning direction are corrected, to thereby control the colour registration of the sub-scanning direction (a process direction of the photoreceptor belt).

As described above, according to a colour registration correcting method of an image formation device of the present invention, an arbitrary reference LSU is independently driven, to detect the difference in distances between the reference LSU and the respective other LSUs. Also, synchronization-window signals are generated according to the differences and the other LSUs correspond to the synchronization window signals, to thereby easily correct LSU fixing errors of an asynchronization sub-scan direction. As a result, the colour registration of a sub-scanning direction may be precisely controlled.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A colour registration correcting method of an image formation device comprising the steps of:
arbitrarily selecting one of Y-, M-, C- and K-LSUs (201-204) and independently driving the selected LSU;
generating respective synchronization-window signals amongst the non-selected LSUs, which signals differ according to the magnitude of mis-registration between the selected LSU and the respective non-selected LSUs; and
driving each driving motor such that each of the non-selected LSUs meet with each of the synchronization-window signals.

2. The colour registration correcting method of claim 1, wherein the Y-LSU (201) is the arbitrarily selected one.

3. The colour registration correcting method of claim 1, wherein the M-LSU (202) is the arbitrarily selected one.

4. The colour registration correcting method of claim 1, wherein the C-LSU (203) is the arbitrarily selected one.

5. The colour registration correcting method of claim 1, wherein the K-LSU (204) is the arbitrarily selected one.

6. The colour registration correcting method of any of claims 1 to 5, wherein the non-selected LSUs are driven such that their respective synchronization-window signal meets with a horizontal-synchronization signal.

7. The colour registration correcting method of claim 6, wherein a beam detection signal is used for the horizontal-synchronization signal.

8. The colour registration correcting method of claim 6, wherein a photoreceptor belt edge detection signal is used for the horizontal-synchronization signal.
